# EUROPEAN PATENT SPECIFICATION

(11) **EP 3 093 097 B1**
(45) Date of publication and mention of the grant of the patent: **28.12.2022**
(21) Application number: 16169056.5
(22) Date of filing: 10.05.2016
(51) Int. Cl.: B23K 26/34, F01D 11/12

(54) **NEAR NET SHAPE ABRADABLE SEAL MANUFACTURING METHOD**
HERSTELLUNGSVERFAHREN EINER ENDKONTURNAHEN ABREIBBAREN DICHTUNG
PROCÉDÉ DE FABRICATION D'UN JOINT ABRADABLE DE FORME QUASI-DEFINITIVE

(30) Priority: 11.05.2015 US 201514708518
(43) Date of publication of application: 16.11.2016
(73) Proprietor: Raytheon Technologies Corporation, Farmington, CT 06032 (US)
(72) Inventor: STROCK, Christopher, Kennebunk, Maine 04043 (US)
(74) Representative: Dehns

(56) References cited:
- EP-A1- 2 574 727
- EP-A2- 2 559 861
- WO-A2-2014/149097
- US-A1- 2003 228 483
- US-A1- 2012 248 708

## Description

### BACKGROUND

The disclosure relates to a method to produce the next generation compressor abradable seals with high raw material utilization ratio and reduced process steps.

In compressor and turbine sections of a gas turbine engine, air seals are used to seal the interface between rotating structure, such as a hub or a blade, and fixed structure, such as a housing or a stator. For example, typically, circumferentially arranged blade seal segments are fastened to a housing, for example, to provide the seal.

Relatively rotating components of a gas turbine engine are not perfectly cylindrical or coaxial with one another during engine operation. As a result, the relatively rotating components may occasionally rub against one another. To this end, an abradable material typically is adhered to the blade seal segments or full rings and/or the rotating component.

Abradable seals in the compressor section of gas turbine engines include characteristics such as, good abradability, spall resistance, and erosion resistance. Abradable seals are required to exhibit a smooth surface, low gas permeability, and environmental durability. The seal is a sacrificial element in order to minimize blade wear, so it is abradable. The seal must also minimize gas flow leakage through the seal, so a low gas permeability is desirable.

Conventional abradable liners are typically thermally sprayed (e.g., plasma sprayed) metal coatings for compressors, and thermally sprayed ceramic coatings for turbines. These coatings have to provide a balance in mechanical properties between a requirement to be soft enough to be abraded and hard enough to resist erosion. Thus thermally sprayed abradable coatings generally have a metallic matrix (e.g., based on Ni, Cr or Al) and an abrasive phase to impart improved cutting characteristics.

The thermal spray deposition methods produce overspray of the coating material. The thermal spray deposition often requires substantial part masking and post spray machining to produce a finished part. These state of the art abradable materials are costly at over $100/lb. and are deposited with a finished part to powder used ratio estimated at less than 20%. This is very wasteful of not only the powder material, but also manpower and lead time.

There is a need to develop a manufacturing process that deposits abradable coatings with a higher powder utilization efficiency and reduced number of manufacturing operations. The new process should manufacture a coating via the initial production of the part very close to the final net shape, or near net shape, thus reducing the need for surface finishing, such as grinding, machining and the like.

US 2012248708A1 discloses a seal which comprises an abradable liner. The abradable liner comprises a metallic, open porous structure formed by fusing a metallic feedstock with an energy beam to build up sequential deposits of the fused feedstock

Document WO 2014/149097 discloses a method according to the preamble of claim 1.

### SUMMARY

In accordance with the present disclosure, there is provided a method of manufacturing a gas turbine engine air seal (e.g. a net shaped structure or seal as herein described) comprising using an energy beam to build up sequential deposits of an agglomerated abradable feedstock material to form an abradable coating. The method includes controlling at least one of a structure and a composition of the air seal based on a pre-determined net shape model. The abradable feedstock material comprises a MAXMET composite material having MAX phase particles coated with a metallic shell.

The method may further comprise forming random structures of the abradable feedstock material throughout the sequential deposits.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 shows a perspective view of a portion of a gas turbine engine incorporating an air seal.
FIG. 2 shows a schematic view of an air seal.
FIG. 3 shows an abradable coating material which does not form part of the claimed invention.
FIG. 4 shows a cross sectional view of a coating on a substrate which does not form part of the claimed invention.
FIG. 5 shows an exemplary abradable coating material.
FIG. 6 shows a cross sectional view of a coating on a substrate.

Like reference numbers and designations in the various drawings indicate like elements.

### DETAILED DESCRIPTION

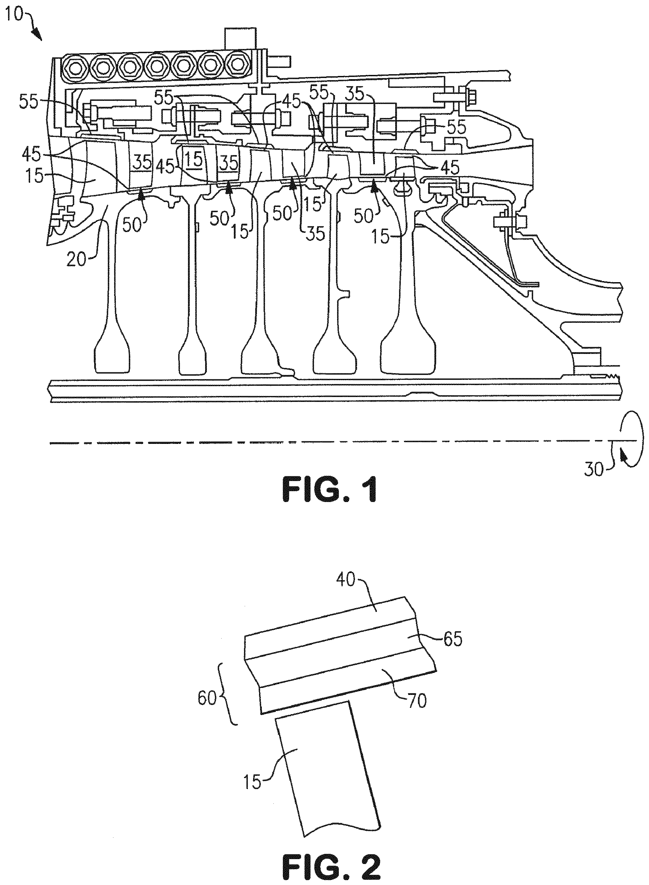

FIG. 1 shows a portion of a gas turbine engine 10, for example, a high pressure compressor section. The engine 10 has blades 15 that are attached to a hub 20 that rotate about an axis 30. Stationary vanes 35 extend from an outer case or housing 40, which may be constructed from a nickel alloy, and are axially interspersed between stages of the turbine blades 15, which may be constructed from titanium in one example. A first gap 45 exists between the blades 15 and the outer case 40, and a second gap 50 exists between the vanes 35 and the hub 20.

Air seals 60 (Figure 2) are positioned in at least one of the first and second gaps 45, 50. Further, the air seals 60 may be positioned on: (a) the outer edge of the blades 15; (b) the inner edge of the vanes 35; (c) an outer surface of the hub 30 opposite the vanes 35; and/or (d) as shown in Figure 2, on the inner surface of outer case 40 opposite the blades 15. It is desirable that the gaps 45, 50 be minimized and interaction between the blades 15, vanes 35 and seals 60 occur to minimize air flow around blade tips or vane tips.

In one example shown in Figure 2, the air seal 60 is integral with and supported by a substrate, in the example, the outer case 40. That is, the air seal 60 is deposited directly onto the outer case 40 without any intervening, separately supported seal structure, such as a typical blade outer air seal. The tip of the blade 5 is arranged in close, proximity to the air seal 60. It should be recognized that the seal provided herein may be used in any of a compressor, a fan or a turbine section and that the seal may be provided on rotating or non-rotating structure. The seal can also be for a turbine pump in a gas pipeline, a water or oil seal in a pump or other application.

The air seal 60 can include a bond coat 65 deposited onto the outer case 40. The bond coat 65 may comprise an alloy, such as a MCrAlY composition. In another exemplary embodiment, the bond coat 65 can be optional, if it is used, the bond coat 65 can be a nickel aluminum composite powder. A composite topcoat 70 acts as an abradable layer that is deposited on the bond coat 65 opposite the outer case 40. In an exemplary embodiment, the metallic bond coat 65 may be replaced by an adhesive layer if the abradable layer is pre-formed.

The exemplary abradable seal 60 can be employed in a variety of applications, such as, for bearing compartments, under-platform seals, cantilevered vane seals, rotating airfoil/blade seals, as well as air and oil seals.

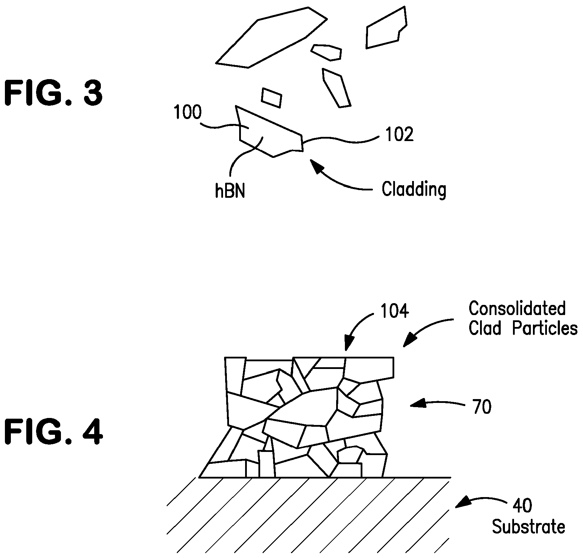

Referring also to FIGS 3, 4, 5 and 6, the coating 70 can comprise a matrix alloy based on Al, Cu, Ni, Co, and the like. In addition, the coating can include filler phases comprising hBN, MAX phases, bentonite, and the like.

In an aspect which does not form part of the claimed invention and is shown in FIGS, 3 and 4, the composite abradable coating 70 consists of a material that is a single distribution of a hexagonal boron nitride ("hBN") 100 or soft ceramic material or other soft phase clad with a metallic-based alloy cladding 102 (such as a Ni based alloy, though others such as cobalt, copper and aluminum are also contemplated herein). Feed stock used to provide the air seal 60 abradable coating 70 is made of composite powder particles of Ni alloy and hBN in which the metal is plated onto the hBN in a chemical cladding process, the metal clad hBN particles are used at a variable ratio with additional metal particles, fugitive pore formers, such as carbon or graphite particles or additional soft phase material (Such as bentonite agglomerated hBN) in the composite powder to adjust and target the coating properties during manufacture. In an aspect, the additional metal particles may be the same composition as the plating or different. The additional particles can be alloying elements such as Al, Cr, Si, B which may serve as a processing aid or modify the matrix alloy to provide some desired property such as oxidation resistance. It may be desirable to add Cr and/or Al and the like, as separate particles. The composition of these particles may advantageously combine with the matrix metal to improve oxidation resistance or other property (by diffusion during heat treatment or in service. Other compounds such as a relatively soft (3 or less or preferably less than 2 on the Mohs hardness scale) ceramic like bentonite clay (e.g., a Montmorillonite) may be substituted for the hBN.

The matrix 102 of Ni based alloy may be coated upon the hBN 100 before application. In an aspect, the metal cladding may also be produced as discrete elemental layers in order to facilitate manufacturing as it is difficult to co-deposit multiple elements as an alloy in the cladding process.

The volume fraction of hBN in the composite coating 104 is about 50-80%. The target metal content of the coating may be around 50% by volume or less. In one aspect, a volume fraction of hBN in the range of 75-80% is used. The target metal fraction can be on the order of 10-36% by volume. Some porosity, 0.5 to 15 volume % is normal coatings depending on the application process and material. A low volume fraction of fugitive may be desirable to further reduce density and rub forces without substantially affecting roughness and gas permeability (e.g., less than about 25 volume %).

An additional volume fraction may be porosity which can be inherent in the application process or intentionally induced by application parameter selection or the addition of a fugitive material. Example fugitive materials are carbon and graphite powders. The low volume fraction of metal in combination with the hBN limits the ductility of a surface layer that forms by mechanical alloying due to plastic deformation as it is rubbed by an airfoil tip (or other rotating element) which results in good abradability. Low volume fraction of metal and poor bonding with the hBN also produces a low modulus composite that is somewhat flexible and compliant to part deformation and thermal expansion contributions to stress. The low modulus keeps stresses low.

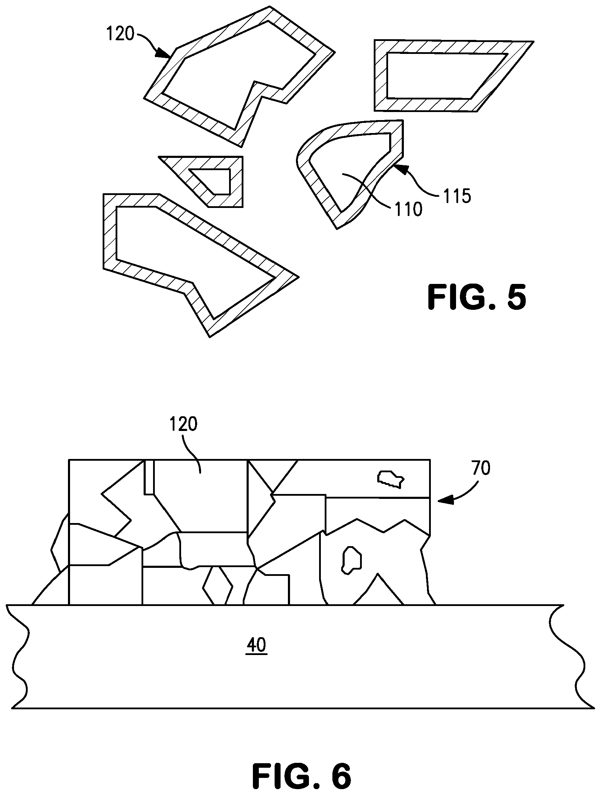

According to the claimed invention, as shown in FIGS 5 and 6, the top coat 70 comprises a MAX phase solid. The coating includes MAX phase particles 110. The MAX phase particles 110 can include ternary carbide or nitride matrix material that may include MAX phases which are defined by the formula Mₙ₊₁AXₙ where n is a number from 1 to 3. M is an early transition metal element, A is an A group element, and X is carbon (C) or nitrogen (N). Early transition metals are any element in the d-block of the periodic table, which includes groups 3 to 12 on the periodic table. A-group elements are mostly group IIA or IVA. The metal matrix is at least one of a low, medium, and high melting point metal or metal alloy. Low melting point metals or metal alloys are those approximately in the range of from 100 degrees Centigrade to 300 degrees Centigrade. Medium melting point metals or metal alloys are those approximately in the range of 300 degrees Centigrade to 1000 degrees Centigrade. High melting point metals or metal alloys are those in the range of 1000 degrees Centigrade and greater. MAXMET materials are characterized by excellent mechanical properties and improved toughness, high damage tolerance, high thermal stability and improved erosion resistance.

The MAX phase particles 110 are encapsulated in a metallic shell 115 to form a MAXMET composite material 120. The metallic shell 115 can comprise any variety of materials depending on the end use of the abradable composite seal 60. In an exemplary embodiment, the metallic shell 115 can comprise a Ni shell material for use with Ni-based abradable composite materials. In another exemplary embodiment the metallic shell 115 can comprise an Al shell for use with Al based abradable composite materials. Besides Ni and Al, depending on the applications, other metals, such as W, Co, Hf, Cr, and the like, can be applied as a coating layer.

The air seal 60 can be deposited through a variety of methods into a net shape with very low material waste. The abradable layer is produced, e.g. by melting a powder feedstock, with a laser beam or other form of concentrated energy to build up sequential fused deposits of the material. The feedstock material can vary depending on the desired end product, and comprises a MAXMET composite material having MAX phase particles coated with a metallic shell. Materials can be metal based powders as well as wire feedstock. Alternative concentrated energy can also include energy beams, such as, electron beams or electric arcs. The application process can include forming three-dimensional structures defined by CAD solid models using layer-by-layer deposition.

The net shaped structure of the seal 60 can be defined by a computer generated model, and this information is then sliced into a large number of deposition layers (e.g. hundreds or thousands of layers). A laser is then guided by each layer of information, over a fine metal powder layer to melt together the metal particles. A layer of fresh powder is then swept over the previous layer and melted in a second laser pass to deposit the next layer. The process is repeated for the subsequent layers. Conveniently, the metal powder may be fed as a stream of powder directly into the laser beam at the point of deposition, and then rastered with the laser.

One or more embodiments have been described. Nevertheless, it will be understood that various modifications may be made. The layer-by-layer deposition procedure provides great control over the structure of the layer. It also allows seals to be formed with enhanced uniformity and repeatability, and with low incidence of manufacturing defects. The process reduces the need to make additional finishing steps, since the initial manufacturing steps produce a near net shaped product. Feedstock wastage may be 10% or less, compared with about 80% typical for thermal spraying.

The near net shape deposition eliminates the need for masking and much of the post machining processes.

Using an energy beam to build up sequential deposits of the fused feedstock allows precise control of the structure of the seal. Product variability can be reduced. Also the structure of the seal can be tailored throughout the seal's thickness to meet the attributes required for the intended operational environment.

In one aspect, the coating provides a strong continuous network of metal matrix that is discontinuously filled with soft phase like hBN or hBN agglomerates. This is accomplished in an efficient manner by metal cladding hBN or hBN agglomerates and depositing them by net shaped direct metal laser sintering. The metal cladding results in a distributed soft phase that is surrounded by an interconnected metal matrix. The interconnectivity of the matrix provides high strength and toughness for the relatively low volume fraction or metal. Target metal fraction is on the order of 10-36 V%. The low volume fraction of metal in combination with the hBN limits ductility of the smeared (mechanically alloyed) layer resulting in good abradability.

The present coating structure and composition results in improved toughness, erosion resistance for a given metal content while maintaining abradability. The composition and structure provides low roughness and low gas permeability due to near fully dense coating structure. Roughness can be reduced due to the well distributed phases and low porosity compared with conventional coating composite structures.

The improved process reduces raw material cost and eliminates manufacturing operations for reduced part cost and lead time. It is estimated that feedstock powder usage can be reduced ~5x and part lead time decreased by a week. The abradable coating will have low gas permeability, reduced density, favorable erosion resistance and a smooth surface finish. Accordingly, other embodiments are within the scope of the following claims.

## Claims

1. A method of manufacturing a gas turbine engine air seal (60) comprising:
using an energy beam to build up sequential deposits of an agglomerated abradable feedstock material to form an abradable coating (70); and
controlling at least one of a structure and a composition of the air seal (60) based on a pre-determined net shape model;
**characterized in that**
the abradable feedstock material comprises a MAXMET composite material (120) having MAX phase particles (110) coated with a metallic shell (115).

2. The method of manufacturing a gas turbine engine air seal (60) of claim 1, further comprising:
forming random structures of said abradable feedstock material throughout said sequential deposits.

3. The method of manufacturing a gas turbine engine air seal (60) of claim 1 or claim 2, wherein the metallic shell (115) comprises Ni, Al, W, Co, Hf, or Cr.

4. The method of manufacturing a gas turbine engine air seal (60) of claim 3, wherein the metallic shell (115) comprises a Ni shell material.

5. The method of manufacturing a gas turbine engine air seal (60) of claim 3, wherein the metallic shell (115) comprises an Al shell.

## Patentansprüche

1. Verfahren zum Herstellen einer Gasturbinentriebwerksluftdichtung (60), umfassend:
Verwenden eines Energiestrahls, um aufeinanderfolgende Ablagerungen eines agglomerierten, abreibbaren Ausgangsmaterials aufzubauen, um eine abreibbare Beschichtung (70) auszubilden; und
Steuern mindestens eines von einer Struktur und einer Zusammensetzung der Luftdichtung (60) basierend auf einem vorbestimmten Endformmodell;
**dadurch gekennzeichnet, dass** das abreibbare Ausgangsmaterial ein MAXMET-Verbundmaterial (120) umfasst, das MAX-Phasen-Partikel (110) aufweist, die mit einer metallischen Hülle (115) beschichtet sind.

2. Verfahren zum Herstellen einer Gasturbinentriebwerksluftdichtung (60) nach Anspruch 1, ferner umfassend:
Ausbilden zufälliger Strukturen des abreibbaren Ausgangsmaterials über die aufeinanderfolgenden Ablagerungen hinweg.

3. Verfahren zum Herstellen einer Gasturbinentriebwerksluftdichtung (60) nach Anspruch 1 oder Anspruch 2, wobei die Metallhülle (115) Ni, Al, W, Co, Hf oder Cr umfasst.

4. Verfahren zum Herstellen einer Gasturbinentriebwerksluftdichtung (60) nach Anspruch 3, wobei die Metallhülle (115) ein Ni-Hüllenmaterial umfasst.

5. Verfahren zum Herstellen einer Gasturbinentriebwerksluftdichtung (60) nach Anspruch 3, wobei die Metallhülle (115) eine Al-Hülle umfasst.

## Revendications

1. Procédé de fabrication d'un joint à air (60) de moteur à turbine à gaz comprenant :
l'utilisation d'un faisceau d'énergie pour accumuler des dépôts séquentiels d'un matériau de base abradable aggloméré pour former un revêtement abradable (70) ; et
la commande d'au moins l'une d'une structure et d'une composition du joint à air (60) sur la base d'un modèle de forme nette prédéterminé ;
**caractérisé en ce que** le matériau de base abradable comprend un matériau composite MAXMET (120) ayant des particules de phase MAX (110) revêtues d'une enveloppe métallique (115).

2. Procédé de fabrication d'un joint à air (60) de moteur à turbine à gaz selon la revendication 1, comprenant en outre :
la formation de structures aléatoires dudit matériau de base abradable tout au long desdits dépôts séquentiels.

3. Procédé de fabrication d'un joint à air (60) de moteur à turbine à gaz selon la revendication 1 ou la revendication 2, dans lequel l'enveloppe métallique (115) comprend du Ni, du Al, du W, du Co, du Hf ou du Cr.

4. Procédé de fabrication d'un joint à air (60) de moteur à turbine à gaz selon la revendication 3, dans lequel l'enveloppe métallique (115) comprend un matériau d'enveloppe en Ni.

5. Procédé de fabrication d'un joint à air (60) de moteur à turbine à gaz selon la revendication 3, dans lequel l'enveloppe métallique (115) comprend une enveloppe en Al.
